# EUROPEAN PATENT APPLICATION

(11) **EP 1 975 768 A2**
(43) Date of publication of application: **01.10.2008**
(21) Application number: 08100665.2
(22) Date of filing: 18.01.2008
(51) Int. Cl.: G06F 3/048

(54) **Method and apparatus for controlling a pointer**

(30) Priority: 30.03.2007 KR 20070031555
(71) Applicant: Samsung Electronics Co., Ltd, Suwon-si, Gyeonggi-do 442-742 (KR)
(72) Inventor: Kim, Joon-hwan, Giheung-gu, Yongin-si Gyeonggi-do (KR); Jon, Seong-ick, Yeongdeungpo-gu Seoul (KR); Yun, Young-hwa, Dongja-gu Seoul (KR); Lee, Jeong-yeon, Bundang-gu, Seongnam-si Gyeonggi-do (KR); Hwang, Woo-seok, Wabu-eup, Namyangju-si Gyeonggi-do (KR)
(74) Representative: Walaski, Jan Filip

(57) **Abstract**

A method for providing a Graphical User Interface (GUT), and an image apparatus having the same are provided. According to the method for providing a GUI, the position of the moving pointer on a display is determined, and the speed of movement of the pointer varies according to the determined result. Accordingly, manipulation of a pointer P is made more convenient.

## Description

The present invention relates to controlling a pointer, particularly to a method of providing a Graphical User Interface (GUI) and a video apparatus using the same, and more particularly, to a method of providing a Graphical User Interface (GUI) with which a user may select a desired item using a pointer and a video apparatus using the same.

Graphical User Interfaces (GUIs) are now widely used for selecting items indicated by icons or menus displayed on a display using a pointer. A user moves the pointer to the desired item to input a user command using an input device such as a mouse or a touch pad. Commands are provided to operate functions of an item to which the pointer points by inputting a key on an input device.

However, it may be cumbersome for a user to move the pointer to the desired item. The larger the size of the display is and the smaller the size of the item is, the more cumbersome it becomes to select the desired item with the pointer.

If the items are gathered in an area covering only part of the display, a more delicate manipulation is required by the user to move the pointer. Users of GUIs seek more convenient means of manipulating a pointer, so such means for moving a pointer to a desired item is required.

The present invention provides a method for providing a Graphical User Interface (GUI) and a video apparatus using the same that enables a user to more conveniently move a pointer to a desired item.

According to an aspect of the present invention, there is provided a method for providing a Graphical User Interface (GUI) comprising determining a position of a moving pointer displayed on a display; displaying the pointer on the display while moving at a first speed, if the pointer is positioned in a first area on the display; and displaying the pointer on the display while moving at a second speed, if the pointer is positioned in a second area on the display.

The first area may be an area displaying the items selectable by a user using the pointer, and the second area may be an area not displaying the items selectable by a user.

The first speed may be lower than the second speed.

Acceleration of the pointer at the first speed may be a negative number, and acceleration of the pointer at the second speed may be a positive number.

The method may further comprise displaying the pointer on the display while moving at a third speed, if the pointer is positioned at a third area on the display, wherein the first area may be an area displaying items which are selected at greater than a specific frequency among items selectable by a user using the pointer, the second area may be an area displaying items which are selected at less than the specific frequency among items selectable by a user, and the third area may be an area not displaying the items selectable by a user.

The first speed may be lower than the second speed, and the second speed may be lower than the third speed.

If a user input device which is movable by a user in a space is moved, the pointer may move in the same direction as the user input device.

According to another aspect of the present invention, there is provided an image apparatus comprising a Graphical User Interface (GUI) generator which generates a pointer and combines the generated pointer with an image to be displayed on a display; and a controller which controls the GUI generator so that a position of the moving pointer is determined, and if the pointer is positioned in a first area, the pointer is displayed on the display while moving at a first speed, and if the pointer is positioned in a second area, the pointer is displayed on the display while moving at a second speed.

The first area may be an area displaying items selectable by a user using the pointer, and the second area may be area not displaying the items selectable by a user using the pointer.

The first speed may be lower than the second speed.

Acceleration of the pointer at the first speed may be a negative number, and acceleration of the pointer at the second speed may be a positive number.

If the pointer is positioned in a third area, the controller may control the GUI generator so that the pointer is displayed on the display while moving at a third speed, the first area may be an area displaying items selected at greater than a specific frequency among items selectable by a user using the pointer, the second area may be area displaying items selected at less than the specific frequency among items selectable by a user using the pointer, and the third area may be an area not displaying items selectable by a user using the pointer.

The first speed may be lower than the second speed, and the second speed may be lower than the third speed.

If a user input device which is movable by a user in a space is moved, the pointer may move in the same direction as the user input device.

These and/or other aspects of the invention will become apparent and more readily appreciated from the following description of exemplary embodiments, taken in conjunction with the accompanying drawings, in which:
FIGS. 1A to 1C are views illustrating a broadcast receiving system to which an exemplary embodiment of the present invention is applicable;
FIG. 2 is a detailed block diagram of a DTV and a remote control;
FIG. 3 is a flow chart illustrating a method for providing a GUI having a pointer moving at variable speed according to an exemplary embodiment of the present invention;
FIG. 4 illustrates an area on a display;
FIGS. 5A to 5C are views illustrating the movement of a pointer at variable speed in relation to the display of FIG. 4; and
FIGS. 6 and 7 are views illustrating an exemplary embodiment of the present invention.

Certain exemplary embodiments of the present invention will now be described in greater detail with reference to the accompanying drawings.

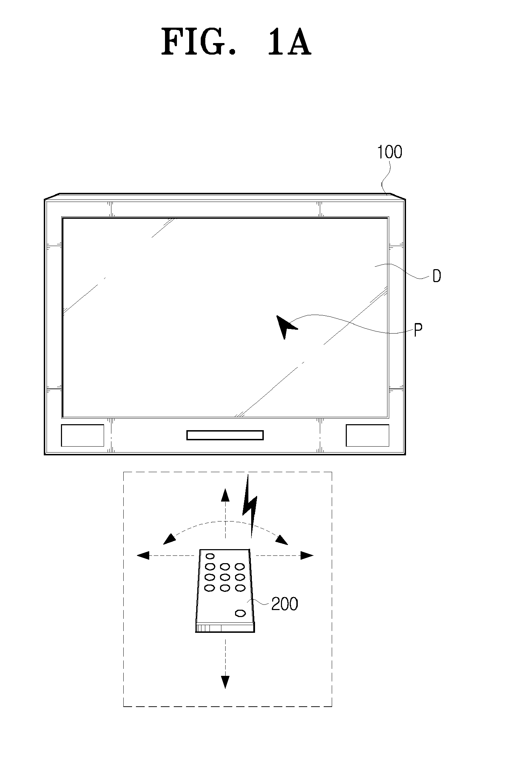

FIG. 1A is a view illustrating a broadcast receiving system according to an exemplary embodiment of the present invention. Referring to FIG. 1A, a broadcast receiving system comprises a DTV 100 as a broadcast receiving apparatus and a remote control (remote control apparatus) 200 as a user input apparatus.

The DTV 100 provides a user with a broadcast received over wire or wirelessly, through a display D. Additionally, the DTV 100 may provide a user with an external input received from an external apparatus which is connected over wire or wirelessly, through the display D, and may also provide a user with a broadcast by reproducing a file, such as a moving image file, a still image file, and a music file, stored in a built-in storage media.

The remote control 200 sends information on the manipulation of the user to the DTV 100, and the DTV 100 operates according to the received information. Although the remote control 200 of FIG. 1A includes a plurality of keys, the remote control 200 may include either one or two keys as occasion demands. A plurality of keys are provided on the top side of the remote control 200, but the plurality of keys may be provided on the other sides such as the left or right side, or the bottom.

As indicated by a dotted arrow in FIG. 1A, the face of the remote control 200 may be moved in a space by the user in an upwards or downwards direction, or to the left or right, or in a direction combining two of these directions, such as an upper-leftwards direction. That is, the face of the remote control 200 may be moved in any direction.

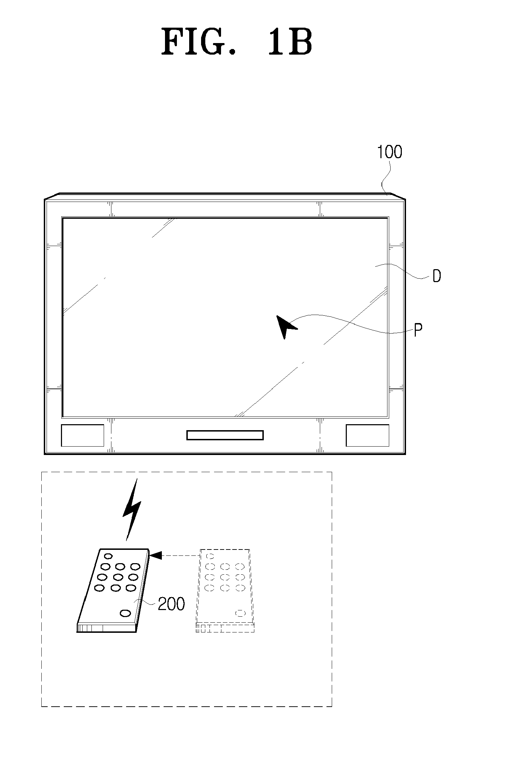

For example, the face of the remote control 200 may be moved while drawing a locus on a virtual plane (VP) which is in a parallel relation with a screen of the display D. FIG. 1B is a view illustrating a case in which the face of the remote control 200 is moved to the left direction while drawing a locus on a virtual plane which is in a parallel relation with the screen of the display D by the user.

The VP may not be in a complete parallel relation with the screen of the display D, and may not be a complete plane. That is, it is practically impossible for the movement of the face of the remote control 200 by the user to be on a complete plane and in a complete parallel relation with the screen of the display D.

Accordingly, the present invention may be applicable to the case in which the face of the remote control 200 moves on an incomplete plane and in an incomplete parallel relation with the screen of the display D.

A user may move the face of the remote control 200 by turning only the user's wrist while the user's arm holding the remote control 200 is fixed.

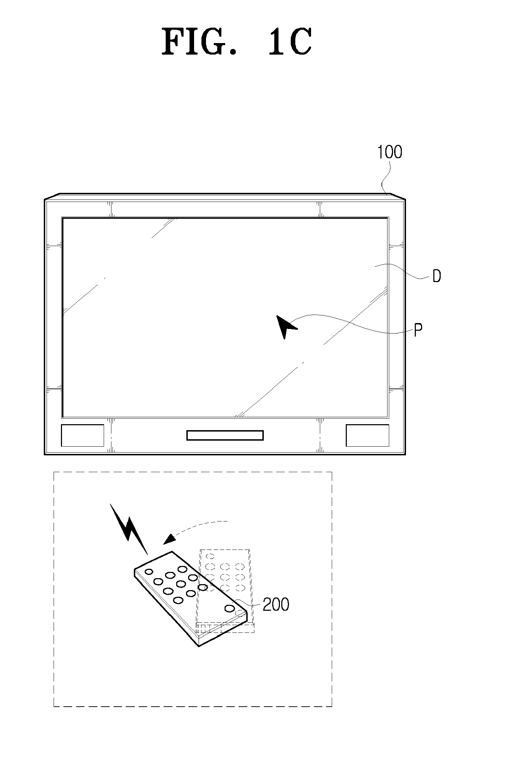

If only the user's wrist moves in an upwards or downwards direction, or to the left or right, or in a direction combining these, such as an upper leftward direction, the face of the remote control 200 may be moved upwards, downwards, or to the left or right, or in a direction combining these, such as an upper leftwards direction while drawing a curved locus on a virtual hemisphere surface. FIG. 1C is a view illustrating the case in which the face of the remote control 200 is moved to the left by a user while drawing a curved locus on a virtual hemisphere surface.

The virtual hemisphere surface, on which the face of the remote control 200 is moved by rotation of the user's wrist, may be a mathematically incomplete hemisphere surface. That is, it is practically impossible for the face of the remote control 200 to be moved by rotating the user's wrist while drawing a locus on a mathematically complete hemisphere surface.

Accordingly, the present invention may be applicable to the case in which the face of the remote control 200 moves not on a mathematically complete hemisphere but an incomplete hemisphere surface while drawing a curved locus.

That is, the pointer P displayed on the display D may be moved by the user spatially moving the remote control 200. The spatial movement of the face of the remote control 200 is distinguished from the movement of a mouse for a personal computer (PC) which is moved over a surface.

When the face of the remote control 200 is moved in a space, the pointer P displayed on the display D moves in the same direction as the face of the remote control 200. For example, i) if a user moves the face of the remote control 200 upwards within a space, the pointer P may move upwards, and ii) if the user moves the face of the remote control 200 to the upper-left in a space, the pointer P may move to the upper-left.

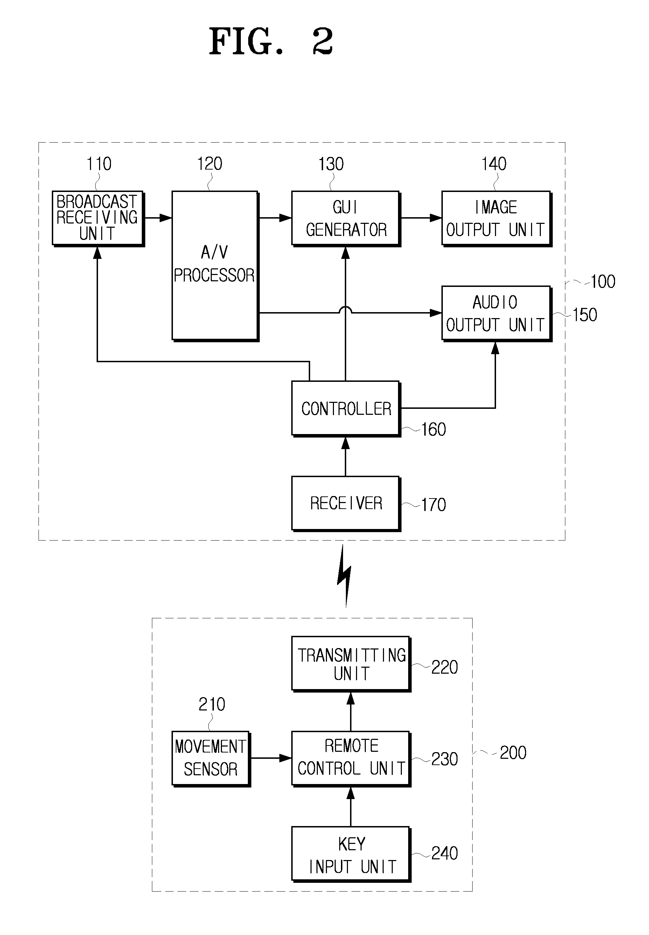

Hereinafter, the DTV 100 and the remote control 200 illustrated in FIG. 1 will be explained in detail with reference to FIG. 2. FIG. 2 is a detailed block diagram of the DTV 100 and the remote control 200.

Referring to FIG. 2, the remote control 200 comprises a movement sensor 210, a transmitting unit 220, a remote control unit 230, and a key input unit 240.

The movement sensor 210 senses the movement of the face of the remote control 200 by the user, and sends the result of sensing to the remote control unit 230 which will be explained in detail below. An exemplary implementation may use a biaxial gyro sensor as the movement sensor 210.

The key input unit 240 may comprise a power key, a channel key, a volume key, and a select key.

The remote control unit 230 transmits information on the movement such as moving direction and moving distance, which is obtained from the sensing result transmitted from the movement sensor 210, to the TV 100 via the transmitting unit 220. The remote control unit 230 also sends the TV 100 information about keys inputted by the user through the transmitting unit 220.

Referring to FIG. 2, the DTV 100 comprises a broadcast receiving unit 110, an A/V processor 120, a Graphic User Interface (GUI) generator 130, an image output unit 140, an audio output unit 150, a controller 160, and a receiver 170.

The broadcast receiving unit 110 receives a broadcast over wire or wirelessly from a broadcasting station or a satellite and decodes the received broadcast.

The A/V processor 120 executes signal processing such as video decoding, video scaling, audio decoding of the broadcast outputted from the broadcast receiving unit 110. And, the A/V processor 120 transmits respectively the image signal to the GUI generator 130, and the audio signal to the audio output unit 150.

The GUI generator 350 generates a GUI to display on the display D, and combines the GUI with the image outputted from the A/V processor 120.

The image output unit 160 may display the image combining the GUI outputted from the GUI generator 130 on the display D, or output to an external display such as external TV connected through an external output terminal (not shown).

The audio output unit 150 outputs the audio outputted from the A/V processor 120 via a speaker, or outputs the audio to the external device connected through the external output terminal.

The controller 160 receives the commands inputted by user manipulation of the face of the remote control 200, or by key input, which is transmitted from the remote control 200 via the receiver 190, and controls the overall operation of the DTV 100.

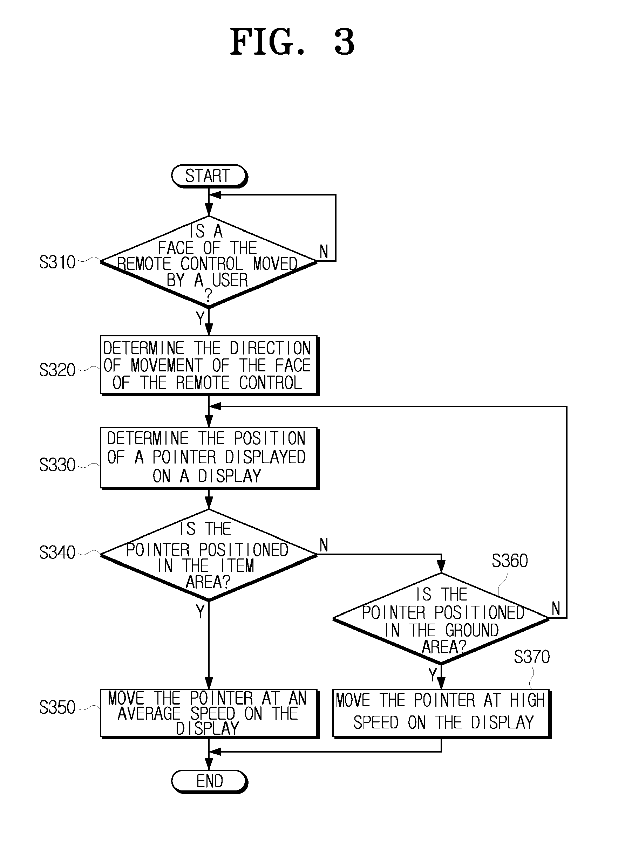

The controller 160 determines the direction of movement of the face of the remote control 200 on the basis of information received through the receiver 170. The controller 160 controls the GUI generator 130 so that the pointer P is displayed while moving on the display D according to the corresponding determined direction of movement of the controller 160. The controller 160 may vary the corresponding speed of movement of the pointer P for the movement of the controller 160. The corresponding speed of movement of the pointer P is determined on the basis of the position of a pointer P displayed on the display D, which will be described in detail below referring to FIG. 3.

FIG. 3 is a flow chart illustrating a method for providing a GUI having a pointer P moving at a variable speed according to an exemplary embodiment of the present invention.

Referring to FIG. 3, if a face of the remote control 200 is moved by a user (S310-Y), the controller 160 determines the direction of movement of the face of the remote control 200 (S320). The controller 160 determines the current position of a pointer P displayed on a display D (S330).

The display D is divided into an area displaying selectable items (an item area) such as icons or menu items which may be selected by a user using a pointer P, and an area not displaying selectable items (a ground area).

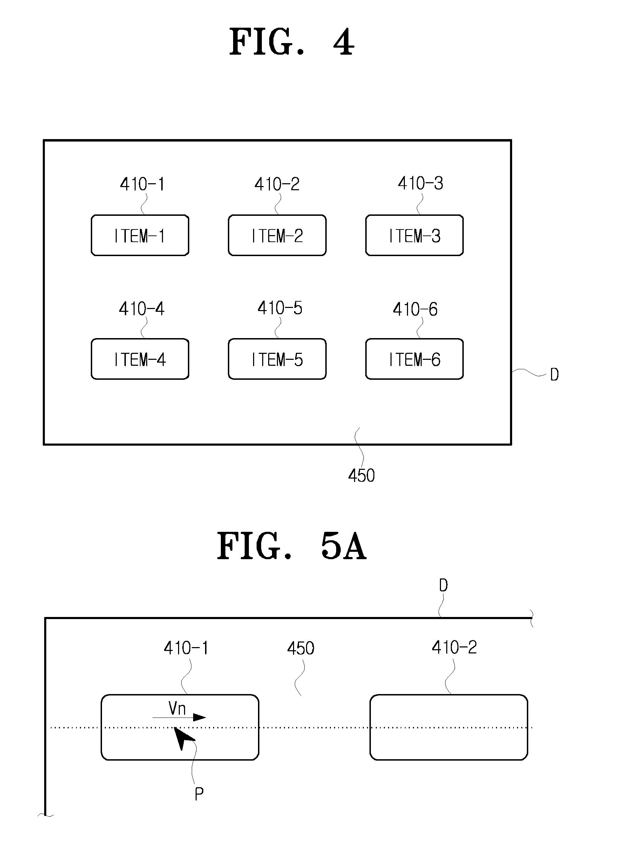

Referring to FIG. 4, if it is supposed that items 1 to 6 (410-1 to 410-6) displayed on the display D are items selectable by a pointer P, i) the area displaying items 1 to 6 (410-1 to 410-6) is an item area, and ii) the area 450 not displaying the items 1 to 6 (410-1 to 410-6) is a ground area.

It is determined if a pointer P is positioned in the item area or the pointer P is positioned in the ground area (S330).

In operation S330, if the pointer P is positioned in the item area (S340-Y), the controller 160 controls the GUI generator to move the pointer P at an average speed for a corresponding first speed of movement of the controller 160 and to display the moving pointer P (S350). The direction of movement of the pointer P in operation S350 is the same as direction of movement of the face of the remote control 200 determined at operation S320.

If the pointer P is positioned in the ground area (S360-Y) in operation S330, the controller 160 controls the GUI generator to move the pointer P at high speed for the same corresponding first speed of movement of the controller 160 and to display the moving pointer P (S370). The direction of movement of the pointer P in operation S370 is the same as direction of movement of the face of the remote control 200 determined in operation S320.

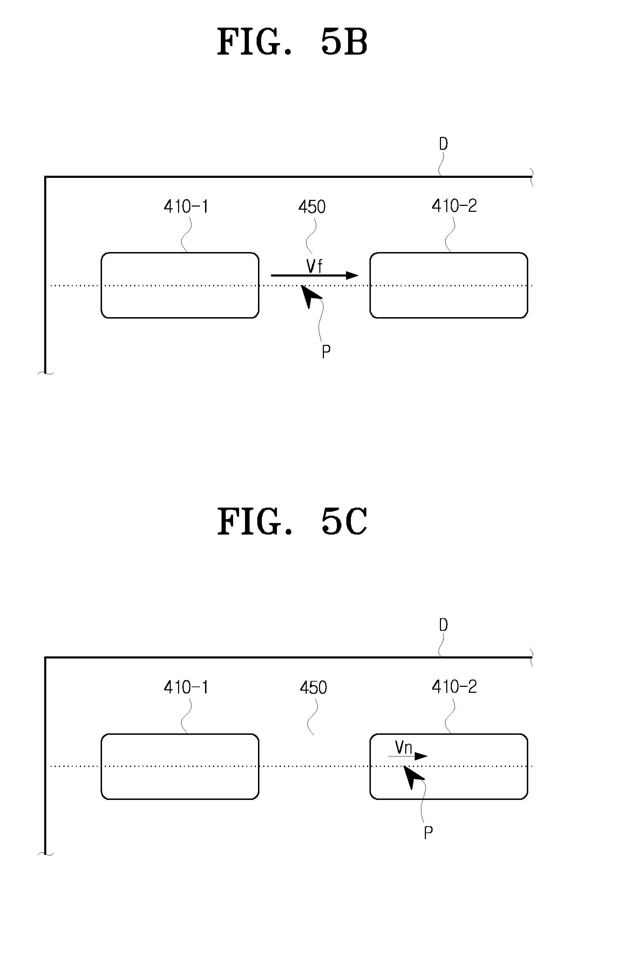

In a case in which a user moves the face of the remote control 200 in a rightwards direction (from item 1 410-1 to item 2 410-2), the process and speed at which the pointer P is moved on the display D are sequentially illustrated in FIGS. 5A to 5C. Referring to FIGS. 5A to 5C, the speed of movement (Vn) at which the pointer P is moved in the item area of the area displaying the item 1 410-1 or item 2 410-2 is lower than the speed of movement (Vf) at which the pointer P is moved in the ground area (Vn < Vf). Both speeds of movement Vn and Vf may correspond to the same speed of movement of the controller 160.

The process of providing a GUI having a pointer P moving at variable speed is described above in detail.

In this exemplary embodiment, the moving pointer P is moved at average, or normal, speed when the moving pointer P is positioned in the item area, and the moving pointer P is moved at a higher than normal speed when the moving pointer P is positioned at the ground area, but this is merely an exemplary embodiment for convenience of description. Accordingly, the speed of movement of the pointer P may be implemented at different speeds from above.

For example, i) if the moving pointer P is positioned in the item area, acceleration of the moving pointer P is implemented as a negative float, or number, and ii) if the moving pointer P is positioned in the ground area, the acceleration of the moving pointer P is implemented as a positive float, or number.

By doing so, i) if the pointer P is being moved in the item area, the pointer P decelerates, and ii) the pointer P is being moved in the ground, or non-selectable item, area, the pointer P accelerates.

Additionally, in operation i), the lowest limit is set to prevent the speed of movement of the pointer P from decreasing, and in operation ii), the highest limit is set to prevent the speed of movement of the pointer P from increasing. In other words, low and high limits are set respectively so that the speed of the pointer does not fall below or increase above these limits.

Although the area of the display D is divided into two areas in the exemplary embodiment, this is merely an exemplary embodiment for convenience of description. Accordingly, the area of the display D may also be divided into three or more than three areas. If the area of the display D is divided into three or more areas, the pointer P may likewise have three or more than three different speeds of movement.

For example, the area of the display D may be divided into three areas such as major item area, minor item area, and ground area, in which i) the major item area is an area displaying items of high frequency (over a specific frequency) among items selectable by a user using the pointer P, ii) the minor item area is an area displaying items of low frequency (below a specific frequency) among the items selectable by the user using the pointer P , and iii) the ground area is an area not displaying the items selectable by the user using the pointer P.

The speed of movement of the pointer P is lowest in the major item area, and is fastest in the ground area. The speed of movement of the pointer P in the minor item area is faster than the speed of movement of the pointer P in the major item area, and is lower than the speed of movement of the pointer P in the ground area.

Although the exemplary embodiments have described the DTV as an example of the broadcast receiving apparatus, the broadcast receiving apparatuses may be implemented as a set top box (STB), a digital multimedia broadcast (DMB) receiving apparatus, or a portable apparatus with a built-in module for receiving broadcast such as a mobile phone with a built-in module for receiving DMB. In the case of the portable apparatus, a pointer P may be moved by using a touch pad instead of a remote control.

Any image apparatus capable of providing a GUI through a display D is applicable to the present invention, in addition to the broadcast receiving apparatus. A touch pad, a mouse, or a key input device to move the pointer P may be used instead of the remote control, according to a kind of the image apparatus in use.

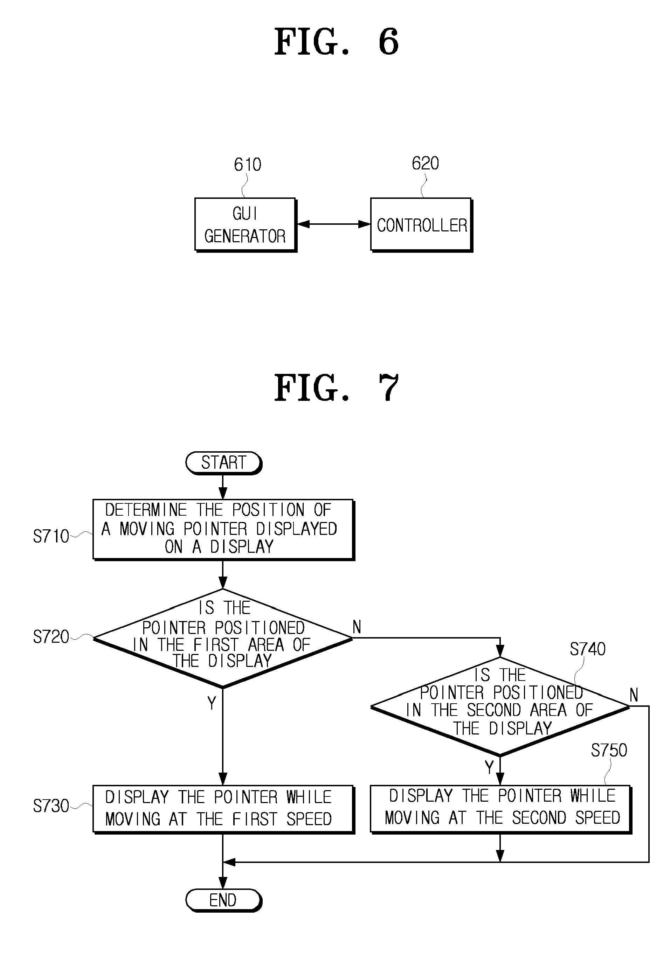

Another exemplary embodiment of the present invention is described in detail with reference to FIGS. 6 and 7.

Referring to FIG. 6, an apparatus according to another exemplary embodiment of the present invention comprises a GUI generator 610, and a controller 620. The GUI generator 610 generates a pointer P and combines the generated GUI with an image to be displayed on a display.

The controller 620 determines the position of the moving pointer P displayed on the display D. If the pointer P is positioned in a first area on the display D, the controller 620 controls the GUI generator 610 so that the pointer P may be displayed on the display D while moving at the first speed. If the pointer P is positioned in a second area on the display D, the controller 620 controls the GUI generator 610 so that the pointer P is displayed on the display D while moving at the second speed.

According to a method for providing GUI illustrated in FIG. 7, an image apparatus determines the position of a moving pointer P displayed on a display D (S710).

If the pointer P is positioned in the first area of the display D (S720-Y), the image apparatus displays the pointer P moving at the first speed (S730).

If the pointer P is positioned in the second area of the display D (S740), the image apparatus displays the pointer P moving at the second speed (S750).

On the basis of the position on the display D displaying the moving pointer P, a GUI having a pointer P moving at variable speed may be provided.

As described above, manipulation of a pointer P made by a user is more convenient by providing a GUI having a pointer P which may move at a variable speed on a display.

According to the exemplary embodiments of the present invention as described above, a GUI having a pointer P moving at a variable speed is provided. Accordingly, manipulation of a pointer P by a user is made more convenient.

In one example, the speed of movement of a pointer P is fast in the area in which items selectable by a user using a pointer P are not displayed, so that the user may move the pointer P more quickly to a desired item when a small item is displayed on a large display D such as a TV. In the area close to the item, the pointer slows down, so that the item can be accurately selected without the pointer overshooting.

Further, the foregoing embodiments are merely exemplary and are not to be construed as limiting the present invention. The present teaching can be readily applied to other types of apparatuses. Also, the description of the embodiments of the present invention is intended to be illustrative, and not to limit the the claims, and many alternatives, modifications, and variations will be apparent to those skilled in the art, while still falling within the scope of the invention as defined by the claims.

## Claims

1. A method of controlling movement of a pointer on a display, comprising:
determining a position of the pointer in relation to the display; and
controlling the speed of the pointer in dependence on the determined position.

2. The method of claim 1, comprising:
displaying the pointer on the display moving at a first speed, if the pointer is positioned in a first area on the display; and
displaying the pointer on the display moving at a second speed, if the pointer is positioned in a second area on the display.

3. The method of claim 2, wherein the first area is an area displaying items selectable by a user using the pointer, and the second area is an area not displaying items selectable by the user.

4. The method of claim 3, wherein the first speed is lower than the second speed.

5. The method of claim 2, 3 or 4, wherein an acceleration of the pointer at the first speed is a negative number, and an acceleration of the pointer at the second speed is a positive number.

6. The method of claim 2, further comprising,
displaying the pointer on the display moving at a third speed, if the pointer is positioned at a third area on the display;
wherein the first area is an area displaying items which are selected at greater than a specific frequency among items selectable by a user using the pointer, the second area is an area displaying items which are selected at less than the specific frequency among items selectable by the user, and the third area is an area not displaying items selectable by the user.

7. The method of claim 6, wherein the first speed is lower than the second speed, and the second speed is lower than the third speed.

8. The method of any one of the preceding claims, wherein if a user input device which is movable by a user in a space, is moved, the pointer moves in the same direction as the user input device.

9. The method of claim 8, wherein displaying the pointer on the display moving at the first speed and displaying the pointer on the display moving at the second speed both correspond to moving the user input device at a third speed.

10. Apparatus for controlling movement of a pointer on a display, comprising:
means for determining a position of the pointer in relation to the display; and
means for controlling the speed of the pointer in dependence on the determined position.

11. The apparatus of claim 10, comprising:
a Graphical User Interface GUI generator for generating a pointer and combining the generated pointer with an image to be displayed on the display; and
a controller for controlling the GUI generator so that a position of the moving pointer is determined, and if the pointer is positioned in a first area, the pointer is displayed on the display moving at a first speed, and if the pointer is positioned in a second area, the pointer is displayed on the display moving at a second speed.

12. The apparatus of claim 11, wherein the first area is an area displaying items selectable by a user using the pointer, and the second area is an area not displaying items selectable by the user using the pointer.

13. The apparatus of claim 11 or 12, wherein the first speed is lower than the second speed.

14. The apparatus of claim 11, 12 or 13, wherein an acceleration of the pointer at the first speed is a negative number, and an acceleration of the pointer at the second speed is a positive number.

15. The apparatus of claim 11, wherein if the pointer is positioned in a third area, the controller is arranged to control the GUI generator so that the pointer is displayed on the display moving at a third speed, the first area being an area displaying items selected at greater than a specific frequency among items selectable by a user using the pointer, the second area being an area displaying items selected at less than the specific frequency among items selectable by the user using the pointer, and the third area being an area not displaying items selectable by the user using the pointer.

16. The apparatus of claim 15, wherein the first speed is lower than the second speed, and the second speed is lower than the third speed.

17. The apparatus of any one of claims 10 to 16, wherein the pointer is arranged to move in the same direction as a user input device.

18. The apparatus of claim 17, wherein different speeds of movement of the pointer in different areas of the display correspond to the same speed of movement of the user input device.
